(19) Europäisches Patentamt
European Patent Office
Office européen des brevets

(11) Veröffentlichungsnummer: **0 065 728**
**B1**

(12) # EUROPÄISCHE PATENTSCHRIFT

(45) Veröffentlichungstag der Patentschrift: **12.12.84**

(51) Int. Cl.³: **C 08 G 63/66**, C 08 G 63/64, C 08 L 69/00

(21) Anmeldenummer: **82104267.8**

(22) Anmeldetag: **15.05.82**

(54) **Neue Copolyestercarbonate und deren Abmischung mit bekannten Polycarbonaten zu thermoplastischen Formmassen.**

(30) Priorität: **23.05.81 DE 3120594**

(43) Veröffentlichungstag der Anmeldung: **01.12.82 Patentblatt 82/48**

(45) Bekanntmachung des Hinweises auf die Patenterteilung: **12.12.84 Patentblatt 84/50**

(84) Benannte Vertragsstaaten: **DE FR GB IT NL**

(56) Entgegenhaltungen: **EP - A - 0 004 020** **EP - A - 0 006 965**

(73) Patentinhaber: **BAYER AG, Konzernverwaltung RP Patentabteilung, D-5090 Leverkusen 1 Bayerwerk (DE)**

(72) Erfinder: **Käfer, Peter, Dr., Bodelschwinghstrasse 18, D-4150 Krefeld (DE)**
Erfinder: **Morbitzer, Leo, Dr., Rungestrasse 50, D-5000 Köln 80 (DE)**
Erfinder: **Nouvertné, Werner, Dr., Scheiblerstrasse 95, D-4150 Krefeld (DE)**
Erfinder: **Neuray, Dieter, Dr., Sebastian-Kneipp-Weg 6, D-4150 Krefeld (DE)**

EP 0 065 728 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung sind thermoplastische Copolyestercarbonate aus Struktureinheiten der Formel (IA) und (IB), mit mittleren Gewichtsmittelmolekulargewichten $\bar{M}w$ (gemessen durch Lichtzerstreuung in Methylenchlorid) von 15 000 bis 200 000, vorzugsweise von 20 000 bis 80 000, die 50 bis 95 Gew.-%, vorzugsweise 80 bis 95 Gew.-% an aromatischen Polycarbonatsegmenten (aus A) und 50 bis 5 Gew.-%, vorzugsweise 20 bis 5 Gew.-%, an Polyestersegmenten (aus B) mit mittleren Zahlenmittelmolekulargewicht $\bar{M}n$ (gemessen durch Osmose in Methylenchlorid) von 2000 bis 20 000, vorzugsweise 4000 bis 16 000 enthalten,

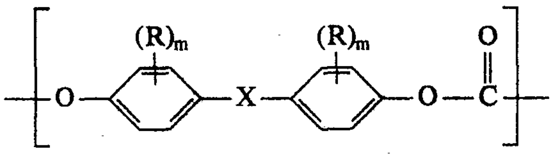 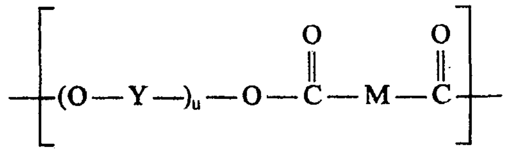 (I)

(IA) (IB)

worin

R = Wasserstoff, Chlor, Brom, $C_1-C_3$-Alkyl,
m = 0, 1 oder 2 und
X = eine Bindung, $C_1-C_8$-Alkylen, $C_2-C_8$-Alkyliden, Cyclohexylen, Cyclohexyliden, $SO_2$, oder S ist,

dadurch gekennzeichnet, daß $Y = -(CH_2)_4-$, M der Rest der Hexahydrophthalsäure oder der Rest der Trimethyladipinsäure und u = eine ganze Zahl von 10 bis 50, vorzugsweise 12—30, sind.

Anzahl und Mengenverhältnis der jeweiligen Struktureinheiten IA und IB richten sich jeweils nach den Angaben für das Gesamtmolekulargewicht $\bar{M}w$ sowie für das Zahlenmittelmolekulargewicht $\bar{M}n$ des Polyestersegments.

Gegenstand der vorliegenden Erfindung sind außerdem thermoplastische Formmassen bestehend aus Mischungen von aromatischen Polycarbonaten der Formel (II)

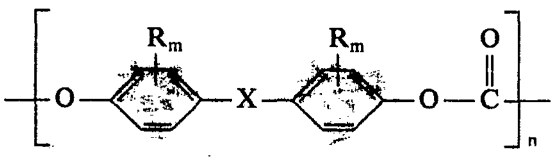 (II)

worin R, m und X die für Formel (IA) genannte Bedeutung haben und n der Polymerisationsgrad von 20 bis 400, vorzugsweise von 25—60, ist, und Copolyestercarbonaten der Formel (I) mit einem Gehalt an Polyestersegmenten von 50 bis 20 Gew.-%, bezogen auf Polyestercarbonat-Gewicht, dadurch gekennzeichnet, daß das Mischungsverhältnis jeweils so ist, daß der Gehalt an Polyestersegmenten in der Formmasse jeweils zwischen 20 Gew.-% und 5 Gew.-% liegt.

Die erfindungsgemäßen Copolyestercarbonate bzw. Formmassen haben eine hervorragende Benzinbeständigkeit.

Copolyestercarbonate und ihre Herstellung sind bekannt (siehe beispielsweise DE-OS 2 636 783 (Le A 16 689), DE-OS 2 651 639 (Le A 17 535), DE-OS 2 726 376 (Le A 18 015), DE-OS 2 712 435 (Le A 17 840), DE-OS 2 726 417 (Le A 18 034), DE-OS 2 837 526 (Le A 18 995) und DE-OS 2 935 317 (Le A 19 828). Als Bausteine für die Herstellung der Polyestersegmente sind in diesen Lit.-Stellen neben vielen anderen Hexahydrophthalsäureanhydrid, Adipinsäure und Polybutylenglykole genannt, nicht jedoch Trimethyladipinsäure.

Von diesen Lit.-Stellen war jedoch nicht abzuleiten, daß die speziellen, erfindungsgemäßen Copolyestercarbonate die hervorragende Benzinbeständigkeit haben.

Mischungen aus Polycarbonaten und Polyestercarbonaten sind ebenfalls bekannt (siehe EP-A 4 020 (Le A 18 725-EP). Wiederum sind Adipinsäure und Poly(tetramethylenoxid)-$\alpha,\omega$-diole, nicht jedoch Hexahydrophthalsäureanhydrid bzw. Trimethyladipinsäure, als Bausteine für die Herstellung der Polyestersegmente genannt. Es war jedoch auch aus EP-A-4 020 nicht abzuleiten, daß die erfindungsgemäßen Formmassen eine hervorragende Benzinbeständigkeit besitzen.

Geeignete Bausteine für die erfindungsgemäßen Copolyestercarbonate sind Polybutylenglykole = Poly(tetramethylenoxid)-$\alpha,\omega$-diole = Polytetrahydrofuran mit mittleren Molekulargewichten $\bar{M}n$ (Zahlenmittel) von 1000 bis 2000, Trimethyladipinsäure (technisches Gemisch aus 2,2,4- bzw. 2,4,4-Trimethyladipinsäure) und Hexahydrophthalsäureanhydrid.

Für die Herstellung der Polycarbonate sowie der Copolyestercarbonate geeignete Diphenole sind solche der Formel (III)

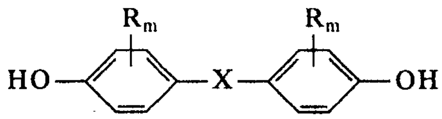

(III)

worin R, m und X die für die Formel (IA) genannte Bedeutung haben.

Geeignete Diphenole der Formel (III) sind 4,4'-Dihydroxydiphenyle, Bis-(4-hydroxyphenyl)-$C_1-C_8$-alkane, Bis-(4-hydroxyphenyl)-cyclohexane, Bis-(4-hydroxyphenyl)-sulfide und Bis-(4-hydroxyphenyl)-sulfone, sowie die entsprechenden in den Phenylkernen durch Chlor, Brom und/oder $C_1-C_3$-Alkyl-Reste substituierten Verbindungen.

Geeignete Diphenole sind beispielsweise in den US-Patentschriften 3 028 365, 3 275 601, 3 250 744, 3 062 781 und 2 999 846 und in den deutschen Offenlegungsschriften 1 570 703, 2 063 050, 2 063 052, 2 211 956, 2 211 957, der französischen Patentschrift 1 561 518 und in der Monographie »H. Schnell, Chemistry and Physics of Polycarbonates, Interscience Publishers, New York, 1964« beschrieben.

Bevorzugte Diphenole sind z. B.:

2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan,
1,1-Bis-(4-hydroxyphenyl)-propan,
1,1-Bis-(4-hydroxyphenyl)-butan,
Bis-(4-hydroxyphenyl)-sulfid und
Bis-(4-hydroxyphenyl)-sulfon.

Die Copolycarbonate können darüber hinaus durch den Einbau geringer Mengen, vorzugsweise von Mengen zwischen 0,05 bis 2,0 Mol-% (bezogen auf eingesetzte Diole), an drei- oder mehr als dreifunktionellen Verbindungen, insbesondere solchen mit drei oder mehr als drei phenolischen Hydroxygruppen verzweigt sein.

Polycarbonate dieser Art sind z. B. in den deutschen Offenlegungsschriften 1 570 533, 1 595 762, 2 116 974, 2 113 347, 2 500 092, der britischen Patentschrift 1 079 821 und der US-Patentschrift 3 544 514 beschrieben.

Zur Herstellung der erfindungsgemäßen Polyestercarbonate der Formel (I) sind Polyester geeignet, die durch Umsetzung von Polytetrahydrofuranen mit Trimethyladipinsäure bzw. Hexahydrophthalsäureanhydrid nach bekannten Verfahren erhalten werden (s. z. B. Houben—Weyl), Band 8, S. 516 ff., Georg Thieme Verlag Stuttgart, 1952) und Molekulargewicht $\bar{M}_n$ (Zahlenmittel) von 2000 bis ca. 20 000 besitzen, vorzugsweise von 4000 bis 16 000, und überwiegend aliphatische OH-Endgruppen besitzen.

Dazu werden n Mol Polytetrahydrofuran mit $(n-1)$ Mol Trimethyladipinsäure oder Hexahydrophthalsäureanhydrid bis zur vollständigen Umsetzung auf 200—250°C, gegebenenfalls unter Abdestillation des entstandenen Reaktionswassers, erhitzt. Die Reaktion kann durch Zugabe von Katalysatoren, z. B. n-Butyltitanat, beschleunigt werden. Die Anzahl der Mole n bestimmt das einzustellende Molekulargewicht des Polyesters. Statt der Trimethyladipinsäure bzw. des Hexahydrophthalsäureanhydrids können auch die entsprechenden Ester von niedrigen Alkoholen zur Herstellung der Polyester verwendet werden.

Die erfindungsgemäßen Polyestercarbonate der allgemeinen Formel (I) werden im wesentlichen nach zwei bekannten Verfahren hergestellt.

Die Herstellung in homogener Phase nach dem Pyridinverfahren ist z. B. von K. P. Perrey, W. J. Jackson, Jr. und J. R. Caldwell, Ind. Engl. Chem. Prod. Res. Develop. 2,246 (1963) beschrieben.

Die Herstellung kann weiterhin in heterogener Phase nach dem Phasengrenzflächenverfahren erfolgen (z. B. S. H. Merrill, J. Polymer Sci., 55, 343 (1961)). Dazu wird zunächst in homogener Phase, z. B. in Methylenchlorid als Lösungsmittel, der Bischlorkohlensäureester des Polyesteralkohols, der vorher aus Polytetrahydrofuran und Trimethyladipinsäure bzw. Hexahydrophthalsäureanhydrid hergestellt wurde, und Phosgen hergestellt. Zu dieser Lösung wird eine Lösung von Bisphenolen, z. B. Bisphenol A, in Natronlauge zugegeben. Die gesamte Mischung wird in der Phasengrenzfläche mit Phosgen zu den hochmolekularen Polyestercarbonaten in bekannter Weise unter Verwendung von Aminkatalysatoren und Kettenabbrechern aufkondensiert.

Das Gewichtsverhältnis von Polyester zu Diphenol bestimmt den Anteil an Polycarbonatsegment (IA) und Polyestersegment (IB) im Endprodukt, da die beiden Verfahren zur Herstellung der Polyestercarbonate praktisch ohne Verluste an Reaktanten verlaufen.

Die Aufarbeitung der Polyestercarbonatlösung erfolgt nach den für Polycarbonat bekannten Methoden, z. B. Ausdampfen des Lösungsmittels in Ausdampfextrudern.

Die Herstellung der erfindungsgemäßen Mischungen aus Polycarbonaten und Polyestercarbonaten erfolgt in herkömmlichen Mischaggregaten, wie Knetern und Schneckenextrudern oder durch Mischen der Lösungen beider Komponenten und anschließender Isolierung über einen Ausdampfextruder.

Die erfindungsgemäßen Copolyestercarbonate können in üblicher Weise zu Folien und anderen Formkörpern verarbeitet werden und überall dort eingesetzt werden, wo hohe Kerbschlagzähigkeiten bei tiefen Temperaturen, hohe Zähigkeiten bei größeren Wandstärken und gute Lösungsmittelbeständigkeit, insbesondere Benzinbeständigkeit gefordert werden. Entsprechendes gilt für die technische Brauchbarkeit der erfindungsgemäßen Abmischungen.

Wie üblich, können den erfindungsgemäßen Copolyestercarbonaten Zusatzstoffe aller Art während oder nach dem Herstellungsvorgang zugegeben werden. Erwähnt seien in diesem Zusammenhang beispielsweise Farbstoffe, Pigmente, Entformungsmittel, Stabilisatoren gegen Feuchtigkeits-, Hitze- und UV-Einwirkung, Gleitmittel, Füllstoffe, wie Glaspulver, Quarzerzeugnisse, Graphit, Molybdänsulfid, Metallpulver, Pulver höherschmelzender Kunststoffe, z. B. Polytetrafluorethylenpulver, natürliche Fasern, wie Baumwolle, Sisal und Asbest, ferner Glasfasern der verschiedensten Art, Metallfäden sowie während des Verweilens in der Schmelze der Polycarbonate stabile und die Polycarbonate nicht merklich schädigende Kunststoffasern.

Die Benzinbeständigkeit der Polycarbonat-Formmassen wird durch Lagerung der entsprechenden Formkörper, z. B. Normkleinstäbe, die unter einer definierten Spannung stehen, welche durch eine bestimmte Dehnung vorgegeben ist, in Testmedien geprüft. Als Testmedium wird eine Mischung aus Toluol/Isooctan im Volumenverhältnis von 1 : 1 verwendet. Die Probekörper, die eine Randfaserdehnung von 0,6% aufweisen, werden im Testmedium eine Stunde gelagert. Anschließend werden die Produkte visuell hinsichtlich Bruch, Rißbildung und Verfärbung beurteilt.

Die folgenden Beispiele sollen den Erfindungsgegenstand näher erläutern. Die angegebenen relativen Lösungsviskositäten werden in Methylenchlorid bei 25° C und einer Konzentration von 5 g/l gemessen.

## Beispiele

### Beispiel 1 (Vergleichsbeispiel) entsprechend EP-A-4 020

#### a) Herstellung des Polycarbonats auf Basis von 4,4'-dihydroxydiphenyl-2,2-propan

Ca. 454 Teile 4,4'-Dihydroxydiphenyl-2,2-propan und 9,5 Teile p-tert.-Butylphenol werden in 1,5 l Wasser suspendiert. In einem 3-Halskolben, ausgestattet mit Rührer und Gaseinleitungsrohr, wird der Sauerstoff aus der Reaktionsmischung entfernt, indem unter Rühren 15 min lang Stickstoff durch die Reaktionsmischung geleitet wird. Dann werden 355 Teile 45%iger Natronlauge und 1000 Teile Methylenchlorid zugegeben. Die Mischung wird auf 25° C abgekühlt. Unter Aufrechterhaltung dieser Temperatur durch Kühlen werden 237 Teile Phosgen während einer Zeitdauer von 120 min zugegeben.

Eine zusätzliche Menge von 75 Teilen einer 45%igen Natronlauge wird nach 15—30 min zugegeben bzw., nachdem die Phosgenaufnahme begonnen hat. Zu der entsprechenden Lösung werden 1,6 Teile Triäthylamin zugegeben und die Mischung weitere 15 min gerührt. Eine hochviskose Lösung wird erhalten, deren Viskosität durch Zugabe von Methylenchlorid reguliert wird. Die wäßrige Phase wird abgetrennt. Die organische Phase wird mit Wasser salz- und alkalifrei gewaschen. Das Polycarbonat hat eine relative Viskosität von 1,29 gemessen in einer 0,5%igen Lösung von Methylenchlorid bei 20° C. Das entspricht einem Molekulargewicht von ca. 32 000. Das so gewonnene Polycarbonat wird extrudiert und granuliert.

#### b) Herstellung eines Polyestercarbonats

5 kg (0,38 Mol) eines Butandiol-Adipinsäure-Polyesters mit Hydroxylendgruppen und dem Molekulargewicht 13 000 werden in 30 l Methylenchlorid gelöst. In diese Lösung tropfen bei 18° C innerhalb einer halben Stunde 320 ml (4,7 Mol) Phosgen in 5 l Methylenchlorid gelöst. Die Lösung wird 40 min gerührt und anschließend mit einer wäßrigen Bisphenolat-Lösung, bestehend aus 5 kg (22 Mol) Bisphenol A und 29,5 kg (48 Mol) 6,5%iger Natronlauge, versetzt.

Es werden 80 l Methylenchlorid und 33 g (0,2 Mol) p-t-Butylphenol als Kettenabbrecher zugefügt. In die Reaktionsmischung werden 400 g (4 Mol) Phosgen innerhalb einer Stunde bei einem pH-Wert von 13 bei 20° C eingeleitet. Zur Aufrechterhaltung des pH-Wertes benötigt man zusätzlich 53,6 kg (87 Mol) 6,5%ige Natronlauge. Nach der Phosgeneinleitung werden als Kondensationskatalysator 500 ml 4%iger Triethylaminlösung zugefügt und 1 Stunde zur Nachkondensation gerührt. Die Aufarbeitung des Polyestercarbonats erfolgt durch Abdampfen des Lösungsmittels. Man erhält ein Polyestercarbonat mit der rel. Viskosität 2,10 ($\bar{M}w$ 110 000; Gew.-% Polyestersegment 47).

c) Herstellung der Mischung

85 Gew.-Teile des Polycarbonats aus Beispiel 1a werden mit 15 Gew.-Teilen des Polyestercarbonats aus Beispiel 1b als Methylenchloridlösung gemischt und über einen Ausdampfextruder bei 320° C und 0,1 Torr extrudiert. Die rel. Lösungsviskosität beträgt 1,33.

Die Mischung zeigt neben den in den EP-A-4 020 angegebenen guten mechannischen und thermischen Eigenschaften eine schlechte Bezinbeständigkeit.

Die Probekörper dieser Mischung, die eine Randfaserdehnung von 0,6% aufweisen, brechen wenige Sekunden nach dem Eintauchen in eine Lösung aus Toluol/Isooctan (Vol.-Verhältnis 1 : 1).

Beispiel 2 (Vergleichsbeispiel)

Nach dem in Beispiel 1b beschriebenen Verfahren werden 10,5 kg (1,05 Mol) eines Polyetheresters aus 96,46 Gew.-Teilen Polytetrahydrofuran ($M_n = 2000$) und 4,69 Gew.-Teilen Adipinsäure mit einem Molekulargewicht von 10 000 und 4,0 kg (17,5 Mol) Bisphenol A mit Phosgen zu einem Polyetherestercarbonat mit einer rel. Lösungsviskosität von 2,30 umgesetzt ($\bar{M}w$ 125 000; Gew.-% Polyestersegment 70).

15 Gew.-Teile des so erhaltenen Polyetherestercarbonats und 85 Gew.-Teile eines Polycarbonats aus Beispiel 1a werden als Methylenchloridlösungen gemischt und über einen Ausdampfextruder bei 320° C und 0,1 Torr extrudiert. Die rel. Lösungsviskosität beträgt 1,31.

Die Probekörper dieser Mischung, die eine Randfaserdehnung von 0,6 aufweisen, brechen 30 Sekunden nach Eintauchen in eine Lösung aus Toluol/Isooctan (Vol.-Verhältnis 1 : 1).

Beispiel 3 (Vergleichsbeispiel)

Nach dem in Beispiel 1b beschriebenen Verfahren werden 1,05 kg (0,066 Mol) eines Polyetheresters aus 98,45 Gew.-Teilen Polyethylenglykol ($M_n = 6000$) und 1,91 Gew.-Teilen Trimethyladipinsäure mit einem Molekulargewicht von 16 000 und 8,48 kg (37,2 Mol) Bisphenol A mit Phosgen und 178,3 g (1,189 Mol) p-tert.-Butylphenol als Kettenabbrecher zu einem Polyestercarbonat umgesetzt. Das Produkt wird über einen Ausdampfextruder bei 320° C und 0,1 Torr extrudiert. Die rel. Lösungsviskosität beträgt 1,32 ($\bar{M}w$ 33 000; Gew.-% Polyestersegment 10).

Die Probekörper dieser Mischung, die eine Randfaserdehnung von 0,6% aufweisen, brechen 20 Sekunden nach Eintauchen in eine Lösung aus Toluol/Isooctan (Vol.-Verhältnis 1 : 1).

Beispiel 4

Nach dem in Beispiel 1b beschriebenen Verfahren werden 10,5 kg (0,66 Mol) eines Polyetheresters aus 93,82 Gew.-Teilen Polytetrahydrofuran ($M_n = 2000$) und 7,64 Gew.-Teilen Trimethyladipinsäure mit einem Molekulargewicht von 16 000 und 4,04 kg (17,7 Mol) Bisphenol A mit Phosgen zu einem Polyetherestercarbonat mit einer rel. Lösungsviskosität von 1,91 ($\bar{M}w$ 95 000; Gew.-% Polyestersegment 70) umgesetzt.

15 Gew.-% dieses Polyethercarbonats und 85 Gew.-% eines Polycarbonats gemäß Beispiel 1a werden als Methylenchloridlösungen gemischt und über einen Ausdampfextruder bei 320° C und 0,1 Torr extrudiert. Die Lösungsviskosität der Mischung beträgt 1,320. Die Eigenschaften des Produktes sind in Tab. I angegeben.

Beispiel 5

Nach dem in Beispiel 1b beschriebenen Verfahren werden 5 kg (0,31 Mol) eines Polyetheresters aus 94,42 Gew.-Teilen Polytetrahydrofuran ($M_n = 2000$) und 6,31 Gew.-Teilen Hexahydrophthalsäure mit einem Molekulargewicht von 16 000 und 5 kg (22 Mol) Bisphenol A mit Phosgen zu einem Polyetherestercarbonat mit einer rel. Lösungsviskosität von 1,85 ($\bar{M}w$ 90 000; Gew.-% Polyestersegment 47) umgesetzt.

15 Gew.-% dieses Polyetherestercarbonats werden mit 85 Gew.-% eines Polycarbonats gemäß Beispiel 1a als Methylenchloridlösungen gemischt und über einem Ausdampfextruder bei 320° C und 0,1 Torr extrudiert. Die Lösungsviskosität der Mischung beträgt 1,317. Die Eigenschaften des Produktes sind in Tab. I angegeben.

Beispiel 6

Nach dem in Beispiel 1b beschriebenen Verfahren werden 1,05 kg (0,26 Mol) eines Polyetheresters aus 96,47 Gew.-Teilen Polytetrahydrofuran ($M_n = 2000$) und 4,38 Gew.-Teilen Trimethyladipinsäure mit einem Molekulargewicht von 4000 und 8,48 kg (37,2 Mol) Bisphenol A mit Phosgen und 139,3 g (0,929 Mol) p-tert.-Butylphenol als Kettenabbrecher zu einem Polyetherestercarbonat umgesetzt. Das Produkt wird über einen Ausdampfextruder bei 320°C und 0,1 Torr extrudiert. Die rel. Lösungsviskosität beträgt 1,320. Mw 33 000, die Eigenschaften des Produktes sind in Tab. I angegeben.

Beispiel 7

Nach dem in Beispiel 1b beschriebenen Verfahren werden 5 kg (1,25 Mol) eines Polyetheresters aus 91,01 Gew.-Teilen Polytetrahydrofuran ($M_n = 1000$) und 8,99 Gew.-Teilen Hexahydrophthalsäure mit einem Molekulargewicht von 4000 und 5 kg (22 Mol) Bisphenol A mit Phosgen zu einem Polyetherestercarbonat mit einer rel. Lösungsviskosität von 1,93 ($M_w = 95\,000$, 47 Gew.-% Polyestersegment) umgesetzt. 15 Gew.-% dieses Polyetherestercarbonats werden mit 85 Gew.-% eines Polycarbonats gemäß Beispiel 1a als Methylenchloridlösungen gemischt und über einem Ausdampfextruder bei 320°C und 0,1 Torr extrudiert. Die Lösungsviskosität der Mischung beträgt 1,322. Die Eigenschaften des Produktes sind in Tab. I angegeben.

Beispiel 8

Nach dem in Beispiel 1b beschriebenen Verfahren werden 1,05 kg (0,066 Mol) eines Polyetheresters aus 94,42 Gew.-Teilen Polytetrahydrofuran ($M_n = 2000$) und 6,31 Gew.-Teilen Hexahydrophthalsäure mit einem Molekulargewicht von 16 000 und 8,48 kg (37,2 Mol) Bisphenol A mit Phosgen und 139,3 g (0,929 Mol) p-tert.-Butylphenol als Kettenabbrecher zu einem Polyetherestercarbonat umgesetzt. Das Produkt wird über einen Ausdampfextruder bei 320°C und 0,1 Torr extrudiert. Die rel. Lösungsviskosität beträgt 1,325 ($M_w = 34\,000$, 10 Gew.-% Polyestersegment); die Eigenschaften des Produktes sind in Tab. I angegeben.

| | Molgewicht des Weichsegments, $M_n$ | Kerbschlagzähigkeit bei Raumtemperatur | bei −40°C | Vicat B | Bruch in Toluol/Isooctan (1 : 1) bei 0,6% Randfaserdehnung nach |
|---|---|---|---|---|---|
| 1. | 13 000 | 40 | 20 | 145 | 5 sec |
| 2. | 10 000 | 42 | 17 | 146 | 30 sec |
| 3. | 16 000 | 41 | 15 | 142 | 20 sec |
| 4. | 16 000 | 45 | 21 | 144 | 1 Stunde, keine Rißbildung |
| 5. | 16 000 | 38 | 18 | 143 | 1 Stunde, leichte Rißbildung |
| 6. | 4 000 | 42 | 20 | 145 | 1 Stunde, keine Rißbildung |
| 7. | 4 000 | 37 | 16 | 141 | 1 Stunde, leichte Rißbildung |
| 8. | 16 000 | 41 | 19 | 145 | 1 Stunde, keine Rißbildung |

Tabelle I

| | Weichsegment aus | Polyester-Gehalt der Mischung bzw. des Cokondensats, Gew.-% |
|---|---|---|
| Beispiel 1 (Vergleichsbeispiel) | Butandiol/Adipinsäure | 7,1% |
| Beispiel 2 (Vergleichsbeispiel) | Polytetrahydrofuran/Adipinsäure | 10,5% |
| Beispiel 3 (Vergleichsbeispiel) | Polyethylenglykol/Trimethyladipinsäure | 10% |
| Beispiel 4 | Polytetrahydrofuran/Trimethyladipinsäure | 10,5% |
| Beispiel 5 | Polytetrahydrofuran/Hexahydrophthalsäure | 7,1% |
| Beispiel 6 | Polytetrahydrofuran/Trimethyladipinsäure | 10% |
| Beispiel 7 | Polytetrahydrofuran/Hexahydrophthalsäure | 7,1% |
| Beispiel 8 | Polytetrahydrofuran/Hexahydrophthalsäure | 10,0% |

**Patentansprüche**

1. Thermoplastische Copolyestercarbonate aus Struktureinheiten der Formeln (IA) und (IB) mit mittleren Gewichtsmittelmolekulargewichten $\bar{M}w$ von 15 000 bis 200 000, die 50 bis 95 Gew.-% an aromatischen Polycarbonatsegmenten und 50 bis 5 Gew.-% an Polyestersegmenten mit einem mittleren Zahlenmittelmolekulargewicht $\bar{M}n$ von 2000 bis 20 000 enthalten,

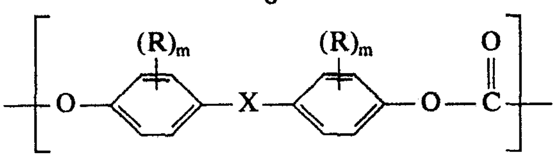
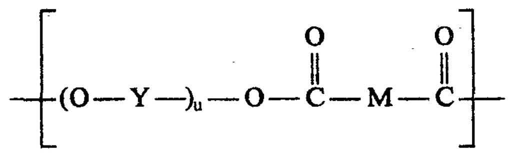
(I)

(IA) (IB)

worin

R = Wasserstoff, Chlor, Brom, $C_1-C_3$-Alkyl,
m = 0, 1 oder 2 und
X = eine Bindung, $C_1-C_8$-Alkylen, $C_2-C_8$-Alkyliden, Cyclohexylen, Cyclohexyliden, $-SO_2-$ oder S ist,

dadurch gekennzeichnet, daß $Y = -(CH_2)_4$, M der Rest der Hexahydrophthalsäure oder der Rest der Trimethyladipinsäure und u eine ganze Zahl von 10 bis 50 sind.

2. Thermoplastische Formmassen bestehend aus Mischungen von aromatischen Polycarbonaten der Formel (II)

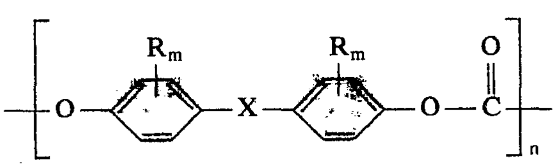
(II)

worin R, m und X die für Formel (IA) genannte Bedeutung haben und n der Polymerisationsgrad von 20 bis 400 ist, und Copolyestercarbonaten des Anspruchs 1 mit einem Gehalt an Polyestersegmenten von 50 bis 20 Gew.-%, bezogen auf Polyestercarbonatgewicht, dadurch gekennzeichnet, daß das Mischungsverhältnis von Polycarbonat der Formel (II) und Copolyestercarbonat der Formel (I) jeweils so ist, daß der Gehalt an Polyestersegmenten in der Formmasse jeweils zwischen 20 Gew.-% und 5 Gew.-% liegt.

## Claims

1. Thermoplastic copolyester carbonates composed of structural units of the formulae (IA) and (IB), which have average weight-average molecular weights $\bar{M}w$ of 15,000 to 200,000, and which contain 50 to 95% by weight of aromatic polycarbonate segments and 50 to 5% by weight of polyester segments having an average number-average molecular weight $\bar{M}n$ of 2000 to 20,000,

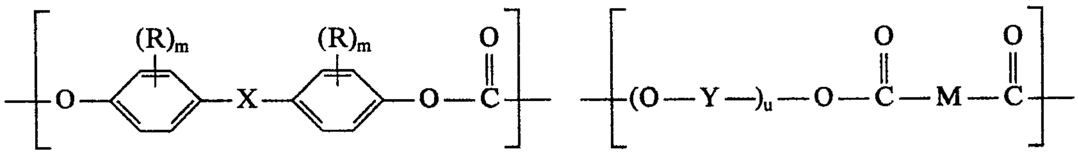

(IA) (IB) (I)

wherein

R is hydrogen, chlorine, bromine, or $C_1-C_3$-alkyl,
m is 0, 1 or 2 and
X is a bond, $C_1-C_8$-alkylene, $C_2-C_8$-alkylidene, cyclohexylene, cyclohexylidene, $-SO_2-$ or S,

characterised in that Y is $-(CH_2)_4$, M is the radical of hexahydrophthalic acid or the radical of trimethyladipic acid and u is an integer from 10 to 50.

2. Thermoplastic moulding compositions consisting of mixtures of aromatic polycarbonates of the formula (II)

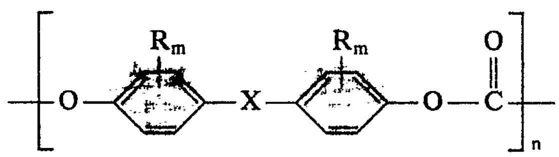

(II)

wherein R, m and X habe the meaning mentioned for formula (IA) and n is the degree of polymerisation of 20 to 400, and copolyester carbonates of claim 1 having a content of polyester segments of 50 to 20% by weight, relative to the polyester carbonate weight, characterised in that the mixing ratio of polycarbonate of the formula (II) and copolyester carbonate of the formula (I) is in each case such that the content of polyester segments in the moulding composition is in each case between 20% by weight and 5% by weight.

## Revendications

1. Copolyester-carbonates thermoplastiques formés de motifs structuraux des formules (IA) et (IB) avec des moyennes en poids $\bar{M}p$ du poids moléculaire de 15 000 à 200 000, qui contiennent 50 à 95% en poids de segments de polycarbonates aromatiques et 50 à 5% en poids de segments de polyester, avec une moyenne en nombre $\bar{M}n$ du poids moléculaire de 2000 à 20 000,

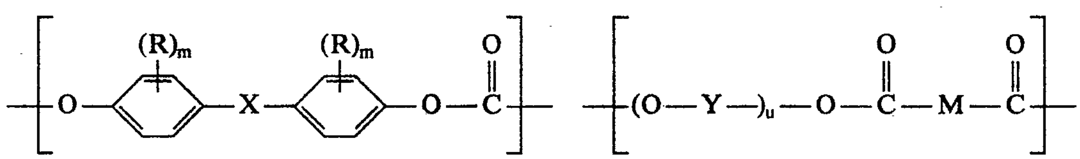

(IA) (IB) (I)

où

R = hydrogène, chlore, brome, alkyle en $C_1$ à $C_3$,
m = 0, 1 ou 2 et
X = représente une liaison, un groupe alkylène en $C_1$ à $C_8$, alkylidène en $C_2$ à $C_8$, cyclohexylène, cyclohexylidène, $-SO_2-$ ou S,

caractérisés en ce que Y représente $-(CH_2)_4$, M est le reste de l'acide hexahydrophthalique ou le reste de l'acide triméthyladipique et u est un nombre entier de 10 à 50.

2. Mélanges à mouler thermoplastiques, consistant en mélanges de polycarbonates aromatiques de formule (II)

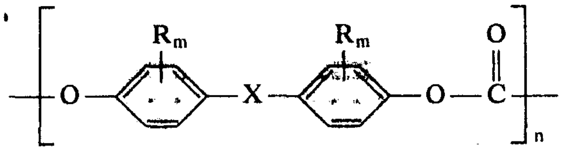

(II)

dans laquelle R, m et X ont la définition indiquée pour la formule (IA) et n est le degré de polymérisation ayant une valeur de 20 à 400, et de copolyester-carbonates suivant la revendication 1 ayant une teneur en segments polyester de 50 à 20% en poids, par rapport au poids de polyester-carbonate, caractérisés en ce que le rapport de mélange du polycarbonate de formule (II) au copolyester-carbonate de formule (I) est choisi dans chaque cas de manière que la teneur en segments polyester du mélange à mouler se situe dans chaque cas entre 20 et 5% en poids.